# FASCICULE DE BREVET EUROPEEN

(11) **EP 4 111 260 B1**
(45) Date de publication et mention de la délivrance du brevet: **06.08.2025**
(21) Numéro de dépôt: 21711619.3
(22) Date de dépôt: 24.02.2021
(51) Int. Cl.: G03B 21/54, F21V 21/15, F21W 131/406, G03B 21/14

(54) **LYRE MOTORISEE POUR VIDEO PROJECTEUR**
MOTORISIERTE HALTERUNG FÜR VIDEOPROJEKTOR
MOTORISED YOKE FOR VIDEO PROJECTOR

(30) Priorité: 27.02.2020 FR 2001934
(43) Date de publication de la demande: 04.01.2023
(73) Titulaire: Xyzed, 75018 Paris (FR)
(72) Inventeur: REBIFFE, Maurice, 75018 PARIS (FR)
(74) Mandataire: Cabinet Beau de Loménie
(86) Numéro de dépôt international: PCT/FR2021/050325
(87) Numéro de publication internationale: WO 2021/170958

(56) Documents cités:
- EP-A1- 3 439 153
- US-A- 5 758 955
- US-A1- 2014 139 426
- US-B1- 6 953 270

## Description

### Domaine Technique

La présente invention se rapporte au domaine de la projection d'images et elle concerne plus particulièrement une lyre motorisée pour projecteurs vidéo à diodes électroluminescentes ou lasers.

### Technique antérieure

Anciennement, les projecteurs cinéma ou vidéo étaient constitués classiquement d'une lampe à incandescence ou d'une lampe à décharge type Xenon ou à halogénures métalliques HMI (Hydrargyre medium-arc iodite), et d'un réflecteur pour orienter le faisceau lumineux issu de cette lampe vers un système optique comportant une ou plusieurs lentilles disposées dans le faisceau lumineux. Dans les projecteurs de scène ou de spectacle, différents obturateurs étaient aussi placés en sortie du système optique pour assurer la réalisation d'effets spéciaux, par exemple un couteau de découpe, une roue de couleur, un iris et une roue de gobos.

Toutefois, depuis quelques années sont apparus sur le marché de la projection d'images, notamment vidéo, des projecteurs de moyenne ou grande puissance dont les sources de lumière, destinées à remplacer ces lampes à décharge ou à incandescence, sont constituées de LEDs ou de diodes lasers. Malheureusement, ces projecteurs vidéo sont lourds (de l'ordre de 50 à 200Kg), volumineux (de l'ordre du m3) et très bruyants. Ce sont des projecteurs monoblocs, la source de lumière étant associée au moteur vidéo (ou tête vidéo), de type LCD (cristaux liquides), LCOS (cristaux liquides sur silicium) ou DLP (processeur lumière numérique) par exemple, dont l'asservissement est en outre relativement complexe. La lyre motorisée recevant le projecteur vidéo doit donc pouvoir accepter de tels poids et volume, ce qui engendre un ensemble peu maniable et source d'énormes contraintes (fixation, stabilisation, précision de repositionnement, répétabilité du mouvement, absence de vibration ...) de nature à limiter considérablement l'utilisation qui peut être faite d'un tel projecteur vidéo. Une lyre motorisée avec un projecteur vidéo est divulguée par le document US 2014/139426.

### Exposé de l'invention

La présente invention propose de s'affranchir de ces contraintes avec un projecteur vidéo moins lourd, moins volumineux, moins bruyant et dont la maniabilité, c'est-à-dire l'amplitude, la précision des mouvements et la vitesse de déplacement, soit grandement augmentée. Un but de l'invention est aussi de réduire la complexité actuelle du contrôle de l'asservissement de ce projecteur vidéo.

Ces buts sont atteints par une lyre motorisée destinée à recevoir dans un support un projecteur vidéo et ayant une base, un premier bras et un second bras, caractérisée en ce que le premier bras est relié à la base au niveau d'un premier axe de rotation motorisé, le second bras étant relié au premier bras au niveau d'un deuxième axe de rotation motorisé et le second bras est relié au support au niveau d'un troisième axe de rotation motorisé, les axes de rotation motorisés étant constitués chacun d'un moteur couplé à un ensemble motoréducteur en prise directe avec le bras ou le support à commander et chacun des moteurs de la lyre motorisée comporte sa propre carte de commande équipée d'un microprocesseur ou microcontrôleur gérant localement la donnée de position en rotation du moteur associé reçue sur la ligne commune de données selon une propre loi d'asservissement préprogrammée, chaque carte de commande possédant une roue codeuse permettant d'identifier un moteur déterminé.

Ainsi, la motorisation en axe direct permet une excellente précision quelle que soit le sens de rotation du moteur et l'intégration d'un troisième un axe de rotation par rapport aux lyres motorisées conventionnelles à deux axes permet la gestion d'un paramètre de réglage complémentaire inexistant sur les solutions de l'art antérieur et relatif au positionnement de l'image en mode « portrait » ou en mode « paysage ».

De préférence, les moteurs sont des moteurs de type pas à pas ou à courant continu sans balais et les ensembles motoréducteurs en prise directe sont de types réducteurs elliptiques à très faible hystérésis, typiquement inférieure à 0,5 Arcmin.. Selon le mode de réalisation envisagé, les premier et second bras ont une forme en « L » ou en « U ». Dans ce second cas, les premier et second bras sont en outre reliés par un simple axe libre de rotation et coaxial au deuxième axe de rotation motorisé.

De préférence, le support comporte un connecteur électrique destiné à être relié au projecteur vidéo pour assurer l'alimentation en énergie et la commande de moteurs du projecteur vidéo depuis l'unité de commande selon une chaine de marguerite. Avantageusement, la base comporte un convertisseur alternatif/continu, une batterie et une unité de commande délivrant sur une ligne de puissance l'énergie nécessaire à l'alimentation en énergie des différents moteurs de la lyre et du projecteur vidéo et sur une ligne commune de données des données de position nécessaires pour commander la rotation des différents moteurs de la lyre et du projecteur vidéo.

Avantageusement, chacune des cartes de commande est configurée pour maintenir depuis la batterie et en toute circonstance une tension minimale d'alimentation nécessaire pour sauvegarder la position de chacun des moteurs de la lyre en mode de veille comme hors tension.

L'invention concerne également un ensemble comportant un projecteur vidéo et une lyre motorisée telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 est une vue en perspective d'un premier exemple de lyre motorisée support de projecteur vidéo selon l'invention,
[Fig. 2] la figure 2 est une vue en perspective d'un second exemple de lyre motorisée support de projecteur vidéo selon l'invention,
[Fig. 3] la figure 3 est un éclaté de la motorisation de chaque axe de rotation de la lyre motorisée des figures 1 ou 2,
[Fig. 4] la figure 4 montre le circuit électrique d'asservissement des différentes positions de la lyre motorisée des figures 1 ou 2,
[Fig. 5] la figure 5 illustre dans une première position le déplacement de la lyre motorisée de la figure 1 selon un premier axe de rotation,
[Fig. 6] la figure 6 illustre dans une seconde position opposée à la première le déplacement de la lyre motorisée de la figure 1 selon le premier axe de rotation,
[Fig. 7] la figure 7 illustre dans une première position le déplacement de la lyre motorisée de la figure 1 selon un deuxième axe de rotation,
[Fig. 8] la figure 8 illustre dans une seconde position opposée à la première le déplacement de la lyre motorisée de la figure 1 selon le deuxième axe de rotation,
[Fig. 9] la figure 9 illustre dans une première position le déplacement de la lyre motorisée de la figure 1 selon un troisième axe de rotation, et
[Fig. 10] la figure 10 illustre dans une seconde position le déplacement de la lyre motorisée de la figure 1 selon le troisième axe de rotation.

### Description des modes de réalisation

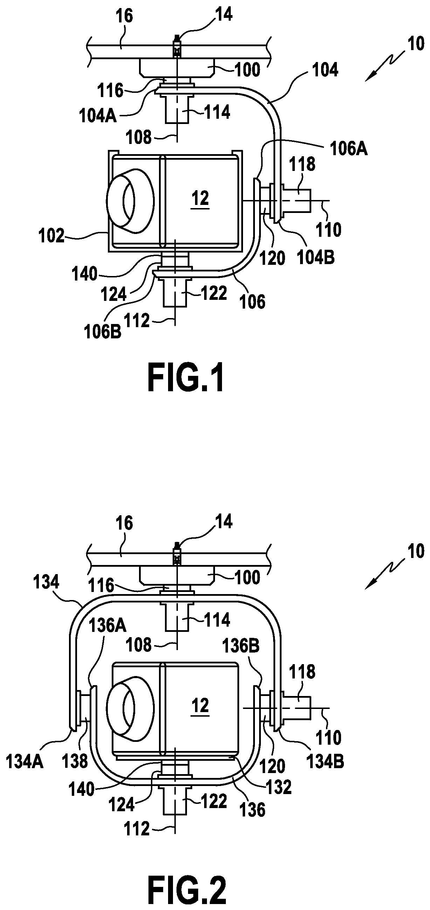

La figure 1 illustre une lyre motorisée 10 conforme à l'invention supportant un projecteur vidéo 12. Par projecteur vidéo, on entend un projecteur complet lorsque celui-ci est de petite dimension ou de faible puissance ou alors la seule tête vidéo, la source lumière étant déportée, lorsque celui-ci est de forte puissance, typiquement supérieur à 10 000 lumens. Cet ensemble lyre/projecteur est avantageusement fixé par des colliers ou pinces 14 solidaire de la base 100 de la lyre motorisée à un ou plusieurs rails 18 eux-mêmes fixés par exemple au plafond d'une scène telle une salle de spectacle. Mais bien entendu tout autre moyen de fixation adéquat est envisageable, cet ensemble pouvant tout simplement reposer par sa base 100 sur une surface plane.

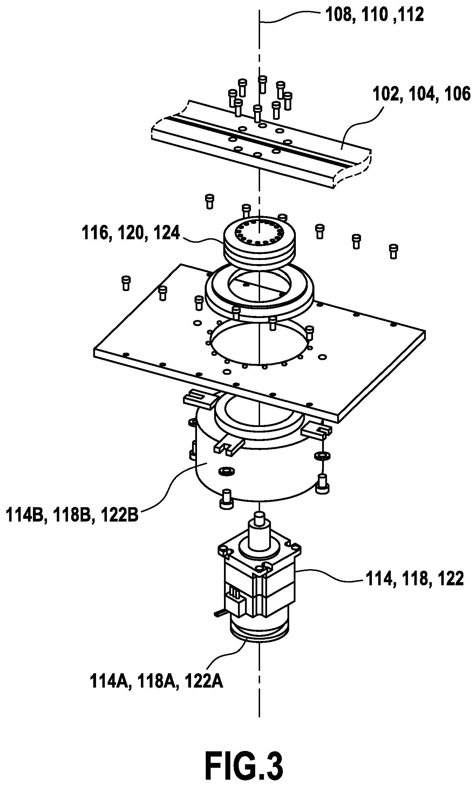

Selon l'invention et dans un premier exemple de réalisation, cette lyre motorisée destinée à recevoir dans un cadre support 102 le vidéo projecteur 12 comporte deux bras 104, 106 en forme de « L » ayant chacun une première et une seconde extrémités, la première extrémité 104A du premier bras 104 étant reliée à la base 100 au niveau d'un premier axe vertical de rotation 108 et la seconde extrémité 104B du premier bras 104 étant reliée à la première extrémité 106A du second bras 106 au niveau d'un deuxième axe horizontal de rotation 110 perpendiculaire au premier axe vertical de rotation 108, la seconde extrémité 106B du second bras 106 étant reliée au cadre support 100 au niveau d'un troisième axe vertical de rotation 112 perpendiculaire au deuxième axe horizontal de rotation 110 et coaxial (dans sa position de repos) au premier axe vertical de rotation 108. Chaque axe de rotation 108, 110, 112 est motorisé par un ensemble moteur-réducteur 114, 116 ; 118, 120 ; 122, 124 en prise directe avec cet axe de rotation (dite aussi motorisation axe direct), c'est à dire sans poulie ou courroie générateur de vibrations (d'à-coups lors des accélérations ou décélérations) et d'hystérésis (ou backlash) importants. Les moteurs sont typiquement des moteurs de type pas à pas ou par exemple à courant continu sans balais et les réducteurs sont des ensembles de moto-réduction à très haute précision de type réducteur elliptique de la société Harmonic Drive^{®} par exemple dont l'hystérésis est inférieure à 0,5 Arcmin (soit 0.0083°). En outre, il est également possible de gérer par l'intermédiaire de la lyre motorisée des moteurs (et leurs ensembles motoréducteurs associés) d'inclinaison 126, de zoom 128 et de focus 130 du projecteur vidéo (chacun illustré à la figure 3), comme il sera montré ci-après avec la description du circuit électrique de la lyre motorisée.

La figure 2 illustre un second exemple de réalisation qui se distingue du premier en ce que le cadre support se limite à une simple plaque support 132 sur laquelle est maintenu fixement le vidéo projecteur 12 et en ce que les deux bras 134, 136 de la lyre motorisée présentent maintenant une configuration symétrique en « U ». Le premier bras 134 est relié à la base 100 au niveau du premier axe de rotation motorisé 108 qui le traverse en son centre et le second bras 136 est relié à la plaque support 132 au niveau du troisième axe de rotation motorisé 112 qui le traverse en son centre et qui dans sa position de repos est coaxial au premier axe de rotation 108, le second bras 136 étant relié aux deux extrémités 134A, 134B du premier bras 134 par ses propres deux extrémités 136A, 136B, le deuxième axe de rotation motorisé 110 traversant comme précédemment deux de ces extrémités 134A, 136A, les deux autres extrémités 134B, 136B, coaxiales et opposées, étant reliées par un simple axe de rotation libre, c'est-à-dire non motorisé 138.

La structure support précédente qu'elle soit à simple (figure 1) ou double (figure 2) bras réalise un parfait équilibre des masses avec un centre de gravité qui permet de supporter des poids élevés (de 20 à plus de 100Kg) sans bras de levier importants et donc ainsi assurer un parfait asservissement mécanique sans vibrations et avec une précision de placement pour des distances à la scène de 10 à 100 m, une qualité de mouvement et une répétabilité exceptionnelles. Cette structure équilibrée permet à la lyre motorisée d'être utilisée en toute position, posée au sol comme suspendue ou encore maintenue déportée latéralement.

L'intégration d'au moins un axe supplémentaire par rapport aux lyres motorisées conventionnelles à deux axes permet la gestion d'un paramètre de réglage complémentaire inexistant sur les solutions de l'art antérieur. En effet, l'image d'un projecteur vidéo est d'un ratio 16/9 voire 4/3 et il convient donc de pouvoir positionner l'image en mode « portrait » comme en mode « paysage », ce qui est rendu possible avec la présence du troisième axe de rotation motorisé 112.

La figure 3 montre plus en détail et sous la forme d'un éclaté la motorisation de chaque axe de rotation 108, 110, 112 depuis chaque moteur 114, 118, 122 sur l'axe duquel est monté en partie arrière un frein électromagnétique 114A, 118A, 122A et en partie avant un collecteur électrique 114B, 118B, 122B enchâssant le moteur et assurant le passage de la puissance et des données décrits plus avant, de la partie statique à la partie mobile, et jusqu'au support 102 ou les bras 104, 106 ; 134, 136 entrainés par l'ensemble de moto-réduction 116, 120, 124.

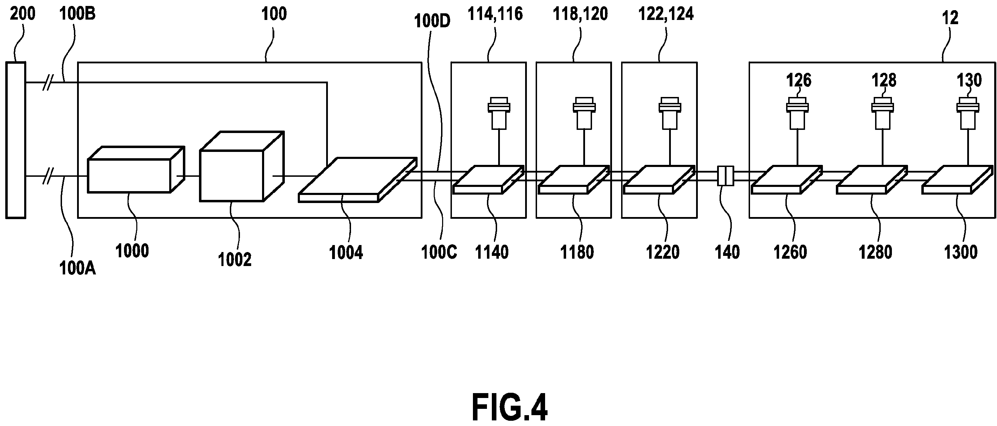

Le circuit électrique assurant la motorisation de la lyre est illustré à la figure 4. La lyre reçoit dans sa base 100 d'un panneau de commande 200 déporté par exemple dans une salle de contrôle, une alimentation en tension alternative 100A et des données de commande 100B nécessaires au déplacement de la lyre sur ses différents axes. Cette tension d'alimentation alternative, typiquement 110/240 Volts 50/60Hz, est transformée dans un convertisseur alternatif/continu 1000 en une ou plusieurs tensions continues typiquement comprises entre 12 et 48 Volts assurant la charge d'une batterie 1002 délivrant elle-même, selon la tension reçue, une tension continue comprise également entre 12 et 48 volts pour l'alimentation en énergie d'une unité de commande 1004 pouvant comporter une mémoire et recevant par ailleurs directement les données de commande 100B du panneau de commande 200.

L'unité de commande 1004 délivre sur une ligne de puissance 100C l'énergie nécessaire à l'alimentation des différents moteurs de la lyre et du projecteur et sur une ligne commune de données 100D, selon des protocoles de communication connus comme RS485, DMX512 ou Art-Net, les données de position nécessaires pour commander la rotation des différents moteurs de la lyre et du projecteur. Contrairement aux lyres de l'art antérieur où une unique carte de commande est reliée en étoile à l'ensemble des moteurs commandés, chacun des moteurs de l'invention comporte sa propre carte de commande 1140, 1180, 1220, 1260, 1280, 1300 équipée d'un microprocesseur (typiquement un microcontrôleur de la famille AVR^{®} de chez Microchip Technology) gérant localement la position en rotation du moteur associé selon une loi d'asservissement préprogrammée avec une vitesse de déplacement, une amplitude du mouvement, une courbe d'accélération/décélération et un couple prédéfinis spécifique à chaque moteur commandé. La liaison entre la lyre et le projecteur se fait au niveau d'un connecteur 140 permettant de relayer au projecteur l'alimentation et les commandes de ses propres moteurs et de maintenir entre tous les moteurs commandés par l'unité de commande 1004 une chaine de marguerite (« daisy chain ») dans laquelle chaque carte de commande autonome reçoit de la carte en « amont » à laquelle elle est reliée, les lignes de puissance et de données, qu'elle retransmet à la carte en « aval » à laquelle elle est également reliée, chaque carte de commande des moteurs possédant une roue codeuse permettant d'identifier un moteur déterminé.

Les cartes de commande sont configurées pour maintenir en toute circonstance une tension minimale d'alimentation nécessaire à la sauvegarde de la position de chacun des moteurs de la lyre en mode de veille comme hors tension, avec un couple élevé de maintien permanent facilité par la présence du frein électromagnétique sur chacun des axes arrières sortants des moteurs 114, 118, 122. Typiquement, ces informations sont sauvegardées dans la micro seconde qui suit la mise hors tension de la lyre (y compris en cas de microcoupures) dans les mémoires internes des microprocesseurs de ces cartes (typiquement une mémoire vive statique, une mémoire Flash ou une mémoire morte programmable électriquement). Ces informations peuvent également être sauvegardées dans la mémoire de l'unité de commande 1004 lorsque celle-ci en possède une.

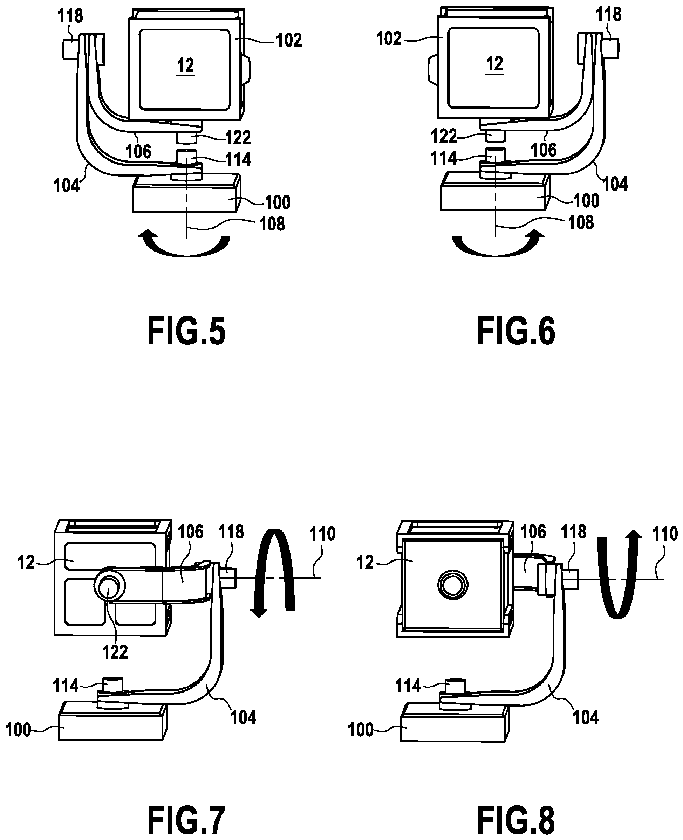

Le fonctionnement de la lyre motorisée est maintenant explicité en regards des figures 5 à 10 qui montrent les différents déplacements de cette lyre autour de ses axes de rotation motorisés.

Sur les figures 5 et 6 sont représentées, dans deux positions opposées, la rotation autour du premier axe vertical de rotation motorisé 108. Cette rotation correspond à la rotation du projecteur sur son axe horizontal (axe « Pan » du projecteur). Cette rotation pourrait être effectuée sur 360° mais, en pratique, elle est limitée à une plage de déplacement de 200° comprise entre -100° et +100° pour permettre le passage des câbles de fibres optiques lorsque le projecteur vidéo comprend des sources de lumière déportées de la tête de projection vidéo comportant l'objectif.

Sur les figures 7 et 8 sont représentées, dans deux positions opposées, la rotation autour du deuxième axe horizontal de rotation motorisé 110. Cette rotation correspond à la rotation du projecteur sur son axe vertical (axe « Tilt » du projecteur). Cette rotation pourrait être effectuée sur 360° mais en pratique elle est limitée à une plage de déplacement de 200° comprise entre -100° et +100° pour permettre le passage des câbles de fibres optiques lorsque le projecteur vidéo comprend des sources de lumière déportées de la tête de projection vidéo comportant l'objectif.

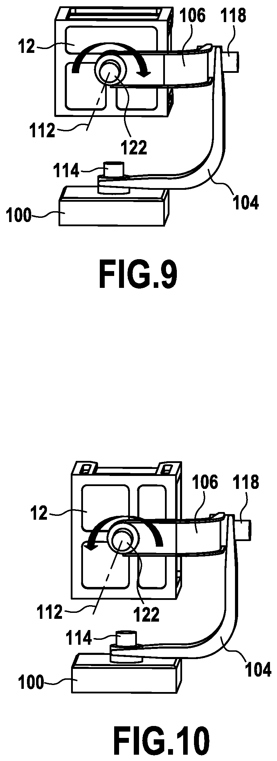

Sur les figures 9 et 10 sont représentées, dans deux positions opposées, la rotation autour du troisième axe vertical de rotation motorisé 112. Cette rotation correspond à la rotation du projecteur sur lui-même (axe « Pan-roll » du projecteur). Cette rotation pourrait être effectuée sur 360° mais en pratique elle est limitée à une plage de déplacement de 100° comprise entre -50° et +50° suffisante pour permettre le positionnement du projecteur vidéo en mode « paysage » (figure 9) ou en mode « portrait » (figure 10).

Avec l'invention, on obtient une lyre performante à la fois techniquement pour la qualité des mouvements lors des déplacements à vue qu'économiquement pour assurer en cas de besoin le seul positionnement de projecteurs inaccessibles.

Bien entendu, si dans l'exemple illustré, il a essentiellement été fait référence à un projecteur vidéo, il est bien évident qu'une telle lyre motorisée peut être mise en œuvre avec un projecteur d'images fixes ou animées.

## Revendications

1. Lyre motorisée destinée à recevoir dans un support (102, 132) un projecteur vidéo et ayant une base (100), un premier bras (104, 134) et un second bras (106, 136), dans laquelle le premier bras est relié à la base (100) au niveau d'un premier axe de rotation motorisé (108), le second bras est relié au premier bras au niveau d'un deuxième axe de rotation motorisé (110) et le second bras est relié au support (102, 132) au niveau d'un troisième axe de rotation motorisé (112), **caractérisée en ce que** les axes de rotation motorisés sont constitués chacun d'un moteur couplé à un ensemble motoréducteur en prise directe avec le bras ou le support à commander et **en ce que** chacun des moteurs de la lyre motorisée comporte sa propre carte de commande (1140, 1180, 1220) équipée d'un microprocesseur ou microcontrôleur gérant localement la donnée de position en rotation du moteur associé reçue sur la ligne commune de données selon une propre loi d'asservissement préprogrammée, chaque carte de commande possédant une roue codeuse permettant d'identifier un moteur déterminé.

2. Lyre motorisée selon la revendication 1, **caractérisée en ce que** les moteurs sont des moteurs de type pas à pas ou à courant continu sans balais et les ensembles motoréducteurs en prise directe sont de types réducteurs elliptiques à très faible hystérésis, typiquement inférieure à 0,5 Arcmin.

3. Lyre motorisée selon la revendication 1 ou la revendication 2, **caractérisée en ce que** les premier et second bras (106, 106 ; 134, 136) ont une forme en « L » ou en « U ».

4. Lyre motorisée selon la revendication 3 et dans laquelle les premier et second bras (134, 136) ont une forme en « U », **caractérisée en ce que** les premier et second bras sont en outre reliés par un simple axe libre de rotation (138) et coaxial au deuxième axe de rotation motorisé 110.

5. Lyre motorisée selon l'une quelconque des revendications 1 à 4, **caractérisée en ce que** le support comporte un connecteur électrique (140) destiné à être relié au projecteur vidéo pour assurer l'alimentation en énergie et la commande de moteurs (126, 128, 130) du projecteur vidéo depuis l'unité de commande (1004) selon une chaine de marguerite.

6. Lyre motorisée selon la revendication 5, **caractérisée en ce que** la base comporte un convertisseur alternatif/continu (1000), une batterie (1002) et une unité de commande (1004) délivrant sur une ligne de puissance (100C) l'énergie nécessaire à l'alimentation en énergie des différents moteurs de la lyre et du projecteur vidéo et sur une ligne commune de données (100D) des données de position nécessaires pour commander la rotation des différents moteurs de la lyre et du projecteur vidéo.

7. Lyre motorisée selon la revendication 1, **caractérisée en ce que** chacune des cartes de commande est configurée pour maintenir depuis la batterie (1002) et en toute circonstance une tension minimale d'alimentation nécessaire pour sauvegarder la position de chacun des moteurs de la lyre en mode de veille comme hors tension.

8. Lyre motorisée selon la revendication 7, **caractérisée en ce que** le microprocesseur ou microcontrôleur comporte une mémoire du type mémoire vive statique, mémoire flash ou mémoire morte programmable électriquement.

9. Ensemble comportant un projecteur vidéo et une lyre motorisée selon l'une quelconque des revendications 1 à 8.

## Patentansprüche

1. Motorisierte Halterung, die dazu bestimmt ist, einen Videoprojektor in einem Träger (102, 132) aufzunehmen und die eine Basis (100), einen ersten Arm (104, 134) und einen zweiten Arm (106, 136) aufweist, wobei der erste Arm auf Ebene einer ersten motorisierten Drehachse (108) mit der Basis (100) verbunden ist, der zweite Arm auf Ebene einer zweiten motorisierten Drehachse (110) mit dem ersten Arm verbunden ist und der zweite Arm auf Ebene einer dritten motorisierten Drehachse (112) mit dem Träger (102, 132) verbunden ist, **dadurch gekennzeichnet, dass** die motorisierten Drehachsen jeweils aus einem Motor bestehen, der mit einer Getriebemotoreinheit gekoppelt ist, die in direktem Eingriff mit dem zu steuernden Arm oder Träger ist, und dass jeder der Motoren der motorisierten Halterung seine eigene Steuerkarte (1140, 1180, 1220) umfasst, die mit einem Mikroprozessor oder Mikrocontroller ausgestattet ist, der lokal die Daten der Drehposition des assoziierten Motors verwaltet, die auf der gemeinsamen Datenleitung gemäß einem eigenen vorprogrammierten Vernetzungsgesetz empfangen werden, jede Steuerkarte ein Kodierrad besitzt, das es ermöglicht, einen bestimmten Motor zu identifizieren.

2. Motorisierte Halterung nach Anspruch 1, **dadurch gekennzeichnet, dass** die Motoren bürstenlose Schritt- oder Gleichstrommotoren sind und die direkt ineinandergreifenden Getriebemotoreinheiten elliptische Getriebearten mit sehr geringer Hysterese, normalerweise weniger als 0,5 Bogenminuten, sind.

3. Motorisierte Halterung nach Anspruch 1 oder 2, **dadurch gekennzeichnet, dass** der erste und der zweite Arm (106, 106; 134, 136) eine "L"- oder "U"-Form aufweisen.

4. Motorisierte Halterung nach Anspruch 3 und wobei der erste und der zweite Arm (134, 136) eine "U"-Form aufweisen, **dadurch gekennzeichnet, dass** der erste und der zweite Arm ferner durch eine einzelne freie Drehachse (138) und koaxial mit der zweiten motorisierten Drehachse 110 verbunden sind.

5. Motorisierte Halterung nach einem der Ansprüche 1 bis 4, **dadurch gekennzeichnet, dass** der Träger einen elektrischen Verbinder (140) umfasst, der dazu bestimmt ist, mit dem Videoprojektor verbunden zu werden, um die Energieversorgung und die Steuerung von Motoren (126, 128, 130) des Videoprojektors von der Steuereinheit (1004) aus gemäß einer Margeritenkette sicherzustellen.

6. Motorisierte Halterung nach Anspruch 5, **dadurch gekennzeichnet, dass** die Basis einen Wechselstrom/Gleichstrom-Wandler (1000), eine Batterie (1002) und eine Steuereinheit (1004), die auf einer Stromleitung (100C) die zur Energieversorgung der verschiedenen Motoren der Halterung und des Videoprojektors erforderliche Energie und auf einer gemeinsamen Datenleitung (100D) Positionsdaten bereitstellt, die zum Steuern der Drehung der verschiedenen Motoren der Halterung und des Videoprojektors erforderlich sind, umfasst

7. Motorisierte Halterung nach Anspruch 1, **dadurch gekennzeichnet, dass** jede der Steuerkarten konfiguriert ist, um von der Batterie (1002) und unter allen Umständen eine minimale Versorgungsspannung aufrechtzuerhalten, die erforderlich ist, um die Position von jedem der Motoren der Halterung sowohl in dem Standby-Modus als auch in dem ausgeschalteten Zustand zu sichern.

8. Motorisierte Halterung nach Anspruch 7, **dadurch gekennzeichnet, dass** der Mikroprozessor oder Mikrocontroller einen Speicher vom Typ statischer Direktzugriffsspeicher, Flash-Speicher oder elektrisch programmierbarer Nur-Lese-Speicher umfasst.

9. Anordnung, umfassend einen Videoprojektor und eine motorisierten Halterung nach einem der Ansprüche 1 bis 8.

## Claims

1. Motorised bracket intended to receive, in a support (102, 132), a video projector and having a base (100), a first arm (104, 134) and a second arm (106, 136), in which the first arm is connected to the base (100) at a first motorised rotation axis (108), the second arm being connected to the first arm at a second motorised rotation axis (110) and the second arm is connected to the support (102, 132) at a third motorised rotation axis (112), **characterised in that** the motorised rotation axes each consist of a motor coupled to a geared motor assembly in direct engagement with the arm or the support that is to be controlled and **in that** each of the motors of the motorised bracket comprises its own control card (1140, 1180, 1220) equipped with a microprocessor or microcontroller locally managing the rotation position data of the associated motor received on the common data line according to its own preprogramed servo-control law, each control card having a code wheel allowing a specific motor to be identified.

2. Motorised bracket according to claim 1, **characterised in that** the motors are stepper motors or brushless DC motors and the geared motor assemblies in direct engagement are elliptical reduction gears with very low hysteresis, typically less than 0.5 Arcmin.

3. Motorised bracket according to claim 1 or claim 2, **characterised in that** the first and second arms (106, 106; 134, 136) have an "L" shape or a "U" shape.

4. Motorised bracket according to claim 3 and in which the first and second arms (134, 136) have a "U" shape, **characterised in that** the first and second arms are, in addition, connected via a single free rotation axis (138) that is coaxial with the second motorised rotation axis 110.

5. Motorised bracket according to any one of claims 1 to 4, **characterised in that** the support comprises an electrical connector (140) intended to be connected to the video projector in order to ensure the supply of power and the control of motors (126, 128, 130) of the video projector from the control unit (1004) according to a daisy chain.

6. Motorised bracket according to claim 5, **characterised in that** the base comprises an AC/DC converter (1000), a battery (1002) and a control unit (1004) delivering, on a power line (100C), the energy necessary for the power supply of the various motors of the bracket and of the video projector and, on a common data line (100D), position data required in order to control the rotation of the various motors of the bracket and of the video projector.

7. Motorised bracket according to claim 1, **characterised in that** each of the control cards is configured to maintain from the battery (1002) and in all circumstances, a minimum supply voltage necessary for saving the position of each of the motors of the bracket, in standby mode and when switched off.

8. Motorised bracket according to claim 7, **characterised in that** the microprocessor or microcontroller has a static RAM memory, flash memory or electrically programmable ROM memory.

9. Assembly comprising a video projector and a motorised bracket according to any one of claims 1 to 8.
